# EUROPEAN PATENT APPLICATION

(11) **EP 4 772 546 A1**
(43) Date of publication of application: **08.07.2026**
(21) Application number: 24872045.0
(22) Date of filing: 19.09.2024
(51) Int. Cl.: C08F 20/04, C08F 2/32, C08F 2/38, C08F 6/24

(54) **METHOD FOR PRODUCING WATER-ABSORBING RESIN PARTICLE AND METHOD FOR CONTROLLING PARTICLE SIZE OF WATER-ABSORBING RESIN PARTICLE**

(30) Priority: 29.09.2023 JP 2023170476
(71) Applicant: Sumitomo Seika Chemicals Co., Ltd., Kako-gun, Hyogo 675-0145 (JP)
(72) Inventor: MATSUI, Sahomi, Himeji-shi, Hyogo 672-8076 (JP)
(74) Representative: Hasegawa, Kan
(86) International application number: PCT/JP2024/033525
(87) International publication number: WO 2025/070254

(57) **Abstract**

Disclosed is a method for producing water-absorbent resin particles, the method including: preparing an aqueous solution that includes monomers including at least one (meth)acrylic acid compound of (meth)acrylic acid or a salt thereof, protoanemonin, and water; forming a particulate hydrogel polymer including a polymer of the monomers and water by reverse phase suspension polymerization in a reaction solution including the aqueous solution and a dispersion medium; and recovering water-absorbent resin particles including the polymer from the reaction solution. The aqueous solution including the protoanemonin in an amount of 6.0 ppm by mass or less with respect to an amount of the (meth)acrylic acid compound is prepared.

## Description

### Technical Field

The present disclosure relates to a method for producing water-absorbent resin particles, and a method for controlling particle diameters of water-absorbent resin particles.

### Background Art

A water-absorbent resin is produced in a state of particles, and is widely used in various fields such as sanitary materials such as paper diapers and hygiene products, horticultural materials such as water retention agents and soil improvement agents, and industrial materials such as waterproofing materials and condensation prevention agents.

In such water-absorbent resin particles, it is required that the ratio of particles having excessively large particle diameters is small (for example, Patent Literature 1).

### Citation List

### Patent Literature

[Patent Literature 1] International Publication No. WO 2012/081355

### Summary of Invention

### Technical Problem

The present disclosure relates to reducing a ratio of coarse particles in water-absorbent resin particles to be obtained in the production of the water-absorbent resin particles by reverse phase suspension polymerization.

### Solution to Problem

The present disclosure includes the followings.
[1] A method for producing water-absorbent resin particles, the method including:
   preparing an aqueous solution that includes monomers including at least one (meth)acrylic acid compound of (meth)acrylic acid or a salt thereof, protoanemonin, and water;
   forming a particulate hydrogel polymer including a polymer of the monomers and water by reverse phase suspension polymerization in a reaction solution including the aqueous solution and a dispersion medium; and
   recovering water-absorbent resin particles including the polymer from the reaction solution,
   in which the aqueous solution including the protoanemonin in an amount of 6.0 ppm by mass or less with respect to an amount of the (meth)acrylic acid compound is prepared, and
   in a case where the aqueous solution includes the salt of (meth)acrylic acid, the amount of the (meth)acrylic acid compound is a total amount of an amount of the (meth)acrylic acid and an amount of (meth)acrylic acid corresponding to an amount of substance of the salt.
[2] The method according to [1],
   in which the aqueous solution including the protoanemonin in an amount of more than 1.0 ppm by mass and 4.7 ppm by mass or less with respect to the amount of the (meth)acrylic acid compound is prepared.
[3] The method according to [1] or [2],
   in which the reaction solution further includes a polymerization inhibitor.
[4] The method according to any one of [1] to [3],
   in which a ratio of particles having a particle diameter of 850 µm or more in the water-absorbent resin particles is less than 20% by mass with respect to a total amount of the water-absorbent resin particles.
[5] A method for controlling particle diameters of water-absorbent resin particles, the method including:
   preparing an aqueous solution that includes monomers including at least one (meth)acrylic acid compound of (meth)acrylic acid or a salt thereof, protoanemonin, and water;
   forming a particulate hydrogel polymer including a polymer of the monomers and water by reverse phase suspension polymerization in a reaction solution including the aqueous solution and a dispersion medium; and
   recovering water-absorbent resin particles including the polymer from the reaction solution,
   in which particle diameters of the water-absorbent resin particles are controlled by adjusting an amount of the protoanemonin in the prepared aqueous solution.
[6] The method according to [5],
   in which the particle diameters of the water-absorbent resin particles are controlled such that a ratio of particles having a particle diameter of 850 µm or more in the water-absorbent resin particles is less than 20% by mass with respect to a total amount of the water-absorbent resin particles.
[7] The method according to [5] or [6],
   in which the particle diameters of the water-absorbent resin particles are controlled by adjusting an amount of the protoanemonin with respect to an amount of the (meth)acrylic acid compound in the prepared aqueous solution to 6.0 ppm by mass or less, andin a case where the aqueous solution includes the salt of (meth)acrylic acid, the amount of the (meth)acrylic acid compound is a total amount of an amount of the (meth)acrylic acid and an amount of (meth)acrylic acid corresponding to an amount of substance of the salt.

### Advantageous Effects of Invention

A ratio of coarse particles in water-absorbent resin particles to be obtained in the production of the water-absorbent resin particles by reverse phase suspension polymerization can be reduced.

### Description of Embodiments

The present invention is not limited to the following examples. In the present specification, (meth)acrylic acid means acrylic acid, methacrylic acid, and a combination thereof.

An example of a method for producing the water-absorbent resin particles includes preparing an aqueous solution that includes monomers including at least one (meth)acrylic acid compound of (meth)acrylic acid or a salt thereof, protoanemonin, and water; forming a particulate hydrogel polymer including a polymer of the monomers and water by reverse phase suspension polymerization in a reaction solution including the aqueous solution and a dispersion medium; and recovering water-absorbent resin particles including the polymer from the reaction solution.

The reaction solution for reverse phase suspension polymerization can be formed by stirring a mixed solution including the aqueous solution and the dispersion medium. The amount of protoanemonin is adjusted to be 6.0 ppm by mass or less with respect to the amount of the (meth)acrylic acid compound in order to prepare the aqueous solution before forming the reaction solution. In a case where the amount of protoanemonin is 6.0 ppm by mass or less, water-absorbent resin particles having a small ratio of coarse particles (particles having a particle diameter of 850 µm or more, which are formed by aggregation of hydrogel polymers during polymerization) can be stably produced. From the same viewpoint, the amount of protoanemonin in the prepared aqueous solution may be 5.5 ppm by mass or less, 5.0 ppm by mass or less, 4.9 ppm by mass or less, 4.8 ppm by mass or less, 4.7 ppm by mass or less, 4.6 ppm by mass or less, 4.5 ppm by mass or less, 4.4 ppm by mass or less, 4.3 ppm by mass or less, 4.2 ppm by mass or less, 4.1 ppm by mass or less, 4.0 ppm by mass or less, 3.9 ppm by mass or less, 3.8 ppm by mass or less, 3.7 ppm by mass or less, 3.5 ppm by mass or less, 3.4 ppm by mass or less, 3.3 ppm by mass or less, 3.2 ppm by mass or less, 3.1 ppm by mass or less, or 3.0 ppm by mass or less with respect to the amount of the (meth)acrylic acid compound. The amount of protoanemonin in the prepared aqueous solution may be more than 1.0 ppm by mass, and may be 1.1 ppm by mass or more, 1.2 ppm by mass or more, 1.3 ppm by mass or more, 1.4 ppm by mass or more, 1.5 ppm by mass or more, 1.6 ppm by mass or more, 1.7 ppm by mass or more, 1.8 ppm by mass or more, 1.9 ppm by mass or more, or 2.0 ppm by mass or more, with respect to the amount of the (meth)acrylic acid compound. The fact that the amount of protoanemonin is appropriately large can also contribute to suppression of the formation of coarse particles.

The amount of protoanemonin in the prepared aqueous solution may be more than 1.0 ppm by mass, and 6.0 ppm by mass or less, 5.5 ppm by mass or less, 5.0 ppm by mass or less, 4.9 ppm by mass or less, 4.8 ppm by mass or less, 4.7 ppm by mass or less, 4.6 ppm by mass or less, 4.5 ppm by mass or less, 4.4 ppm by mass or less, 4.3 ppm by mass or less, 4.2 ppm by mass or less, 4.1 ppm by mass or less, 4.0 ppm by mass or less, 3.9 ppm by mass or less, 3.8 ppm by mass or less, 3.7 ppm by mass or less, 3.5 ppm by mass or less, 3.4 ppm by mass or less, 3.3 ppm by mass or less, 3.2 ppm by mass or less, 3.1 ppm by mass or less, or 3.0 ppm by mass or less with respect to the amount of the (meth)acrylic acid compound.

The amount of protoanemonin in the prepared aqueous solution may be 1.1 ppm by mass or more, and 6.0 ppm by mass or less, 5.5 ppm by mass or less, 5.0 ppm by mass or less, 4.9 ppm by mass or less, 4.8 ppm by mass or less, 4.7 ppm by mass or less, 4.6 ppm by mass or less, 4.5 ppm by mass or less, 4.4 ppm by mass or less, 4.3 ppm by mass or less, 4.2 ppm by mass or less, 4.1 ppm by mass or less, 4.0 ppm by mass or less, 3.9 ppm by mass or less, 3.8 ppm by mass or less, 3.7 ppm by mass or less, 3.5 ppm by mass or less, 3.4 ppm by mass or less, 3.3 ppm by mass or less, 3.2 ppm by mass or less, 3.1 ppm by mass or less, or 3.0 ppm by mass or less with respect to the amount of the (meth)acrylic acid compound.

The amount of protoanemonin in the prepared aqueous solution may be 1.2 ppm by mass or more, and 6.0 ppm by mass or less, 5.5 ppm by mass or less, 5.0 ppm by mass or less, 4.9 ppm by mass or less, 4.8 ppm by mass or less, 4.7 ppm by mass or less, 4.6 ppm by mass or less, 4.5 ppm by mass or less, 4.4 ppm by mass or less, 4.3 ppm by mass or less, 4.2 ppm by mass or less, 4.1 ppm by mass or less, 4.0 ppm by mass or less, 3.9 ppm by mass or less, 3.8 ppm by mass or less, 3.7 ppm by mass or less, 3.5 ppm by mass or less, 3.4 ppm by mass or less, 3.3 ppm by mass or less, 3.2 ppm by mass or less, 3.1 ppm by mass or less, or 3.0 ppm by mass or less with respect to the amount of the (meth)acrylic acid compound.

The amount of protoanemonin in the prepared aqueous solution may be 1.3 ppm by mass or more, and 6.0 ppm by mass or less, 5.5 ppm by mass or less, 5.0 ppm by mass or less, 4.9 ppm by mass or less, 4.8 ppm by mass or less, 4.7 ppm by mass or less, 4.6 ppm by mass or less, 4.5 ppm by mass or less, 4.4 ppm by mass or less, 4.3 ppm by mass or less, 4.2 ppm by mass or less, 4.1 ppm by mass or less, 4.0 ppm by mass or less, 3.9 ppm by mass or less, 3.8 ppm by mass or less, 3.7 ppm by mass or less, 3.5 ppm by mass or less, 3.4 ppm by mass or less, 3.3 ppm by mass or less, 3.2 ppm by mass or less, 3.1 ppm by mass or less, or 3.0 ppm by mass or less with respect to the amount of the (meth)acrylic acid compound.

The amount of protoanemonin in the prepared aqueous solution may be 1.4 ppm by mass or more, and 6.0 ppm by mass or less, 5.5 ppm by mass or less, 5.0 ppm by mass or less, 4.9 ppm by mass or less, 4.8 ppm by mass or less, 4.7 ppm by mass or less, 4.6 ppm by mass or less, 4.5 ppm by mass or less, 4.4 ppm by mass or less, 4.3 ppm by mass or less, 4.2 ppm by mass or less, 4.1 ppm by mass or less, 4.0 ppm by mass or less, 3.9 ppm by mass or less, 3.8 ppm by mass or less, 3.7 ppm by mass or less, 3.5 ppm by mass or less, 3.4 ppm by mass or less, 3.3 ppm by mass or less, 3.2 ppm by mass or less, 3.1 ppm by mass or less, or 3.0 ppm by mass or less with respect to the amount of the (meth)acrylic acid compound.

The amount of protoanemonin in the prepared aqueous solution may be 1.5 ppm by mass or more, and 6.0 ppm by mass or less, 5.5 ppm by mass or less, 5.0 ppm by mass or less, 4.9 ppm by mass or less, 4.8 ppm by mass or less, 4.7 ppm by mass or less, 4.6 ppm by mass or less, 4.5 ppm by mass or less, 4.4 ppm by mass or less, 4.3 ppm by mass or less, 4.2 ppm by mass or less, 4.1 ppm by mass or less, 4.0 ppm by mass or less, 3.9 ppm by mass or less, 3.8 ppm by mass or less, 3.7 ppm by mass or less, 3.5 ppm by mass or less, 3.4 ppm by mass or less, 3.3 ppm by mass or less, 3.2 ppm by mass or less, 3.1 ppm by mass or less, or 3.0 ppm by mass or less with respect to the amount of the (meth)acrylic acid compound.

The amount of protoanemonin in the prepared aqueous solution may be 1.6 ppm by mass or more, and 6.0 ppm by mass or less, 5.5 ppm by mass or less, 5.0 ppm by mass or less, 4.9 ppm by mass or less, 4.8 ppm by mass or less, 4.7 ppm by mass or less, 4.6 ppm by mass or less, 4.5 ppm by mass or less, 4.4 ppm by mass or less, 4.3 ppm by mass or less, 4.2 ppm by mass or less, 4.1 ppm by mass or less, 4.0 ppm by mass or less, 3.9 ppm by mass or less, 3.8 ppm by mass or less, 3.7 ppm by mass or less, 3.5 ppm by mass or less, 3.4 ppm by mass or less, 3.3 ppm by mass or less, 3.2 ppm by mass or less, 3.1 ppm by mass or less, or 3.0 ppm by mass or less with respect to the amount of the (meth)acrylic acid compound.

The amount of protoanemonin in the prepared aqueous solution may be 1.7 ppm by mass or more, and 6.0 ppm by mass or less, 5.5 ppm by mass or less, 5.0 ppm by mass or less, 4.9 ppm by mass or less, 4.8 ppm by mass or less, 4.7 ppm by mass or less, 4.6 ppm by mass or less, 4.5 ppm by mass or less, 4.4 ppm by mass or less, 4.3 ppm by mass or less, 4.2 ppm by mass or less, 4.1 ppm by mass or less, 4.0 ppm by mass or less, 3.9 ppm by mass or less, 3.8 ppm by mass or less, 3.7 ppm by mass or less, 3.5 ppm by mass or less, 3.4 ppm by mass or less, 3.3 ppm by mass or less, 3.2 ppm by mass or less, 3.1 ppm by mass or less, or 3.0 ppm by mass or less with respect to the amount of the (meth)acrylic acid compound.

The amount of protoanemonin in the prepared aqueous solution may be 1.8 ppm by mass or more, and 6.0 ppm by mass or less, 5.5 ppm by mass or less, 5.0 ppm by mass or less, 4.9 ppm by mass or less, 4.8 ppm by mass or less, 4.7 ppm by mass or less, 4.6 ppm by mass or less, 4.5 ppm by mass or less, 4.4 ppm by mass or less, 4.3 ppm by mass or less, 4.2 ppm by mass or less, 4.1 ppm by mass or less, 4.0 ppm by mass or less, 3.9 ppm by mass or less, 3.8 ppm by mass or less, 3.7 ppm by mass or less, 3.5 ppm by mass or less, 3.4 ppm by mass or less, 3.3 ppm by mass or less, 3.2 ppm by mass or less, 3.1 ppm by mass or less, or 3.0 ppm by mass or less with respect to the amount of the (meth)acrylic acid compound.

The amount of protoanemonin in the prepared aqueous solution may be 1.9 ppm by mass or more, and 6.0 ppm by mass or less, 5.5 ppm by mass or less, 5.0 ppm by mass or less, 4.9 ppm by mass or less, 4.8 ppm by mass or less, 4.7 ppm by mass or less, 4.6 ppm by mass or less, 4.5 ppm by mass or less, 4.4 ppm by mass or less, 4.3 ppm by mass or less, 4.2 ppm by mass or less, 4.1 ppm by mass or less, 4.0 ppm by mass or less, 3.9 ppm by mass or less, 3.8 ppm by mass or less, 3.7 ppm by mass or less, 3.5 ppm by mass or less, 3.4 ppm by mass or less, 3.3 ppm by mass or less, 3.2 ppm by mass or less, 3.1 ppm by mass or less, or 3.0 ppm by mass or less with respect to the amount of the (meth)acrylic acid compound.

The amount of protoanemonin in the prepared aqueous solution may be 2.0 ppm by mass or more, and 6.0 ppm by mass or less, 5.5 ppm by mass or less, 5.0 ppm by mass or less, 4.9 ppm by mass or less, 4.8 ppm by mass or less, 4.7 ppm by mass or less, 4.6 ppm by mass or less, 4.5 ppm by mass or less, 4.4 ppm by mass or less, 4.3 ppm by mass or less, 4.2 ppm by mass or less, 4.1 ppm by mass or less, 4.0 ppm by mass or less, 3.9 ppm by mass or less, 3.8 ppm by mass or less, 3.7 ppm by mass or less, 3.5 ppm by mass or less, 3.4 ppm by mass or less, 3.3 ppm by mass or less, 3.2 ppm by mass or less, 3.1 ppm by mass or less, or 3.0 ppm by mass or less with respect to the amount of the (meth)acrylic acid compound.

In a case where the aqueous solution includes a salt of (meth)acrylic acid, the amount of the (meth)acrylic acid compound as a reference for the amount of the trace components such as protoanemonin is a total amount of an amount of the (meth)acrylic acid and an amount of (meth)acrylic acid corresponding to an amount of substance of the salt of (meth)acrylic acid. The amount of (meth)acrylic acid corresponding to the amount of substance of the salt of the (meth)acrylic acid compound means an amount of (meth)acrylic acid that is the same as the amount of substance of the salt of the (meth)acrylic acid. The amount of protoanemonin can be quantified, for example, by gas chromatography. For example, a sample of a (meth)acrylic acid raw material that includes (meth)acrylic acid and a trace component such as protoanemonin and is used for preparing an aqueous solution, or an aqueous solution including a (meth)acrylic acid compound, protoanemonin, and the like can be analyzed by gas chromatography. The amount of protoanemonin in the (meth)acrylic acid raw material may be 6.0 ppm by mass or less, based on the amount of the (meth)acrylic acid.

The (meth)acrylic acid raw material and the aqueous solution prepared therefrom may include trace components such as furfural, benzaldehyde, and acrolein, in addition to protoanemonin. The amount of these trace components, which falls within an appropriate range, can also contribute to stable production of the water-absorbent resin particles having an appropriate particle diameter. The amounts of furfural, benzaldehyde, and acrolein can be quantified by gas chromatography.

The amount of furfural in the (meth)acrylic acid raw material or the aqueous solution prepared therefrom may be 3.0 ppm by mass or less, 2.5 ppm by mass or less, or 2.0 ppm by mass or less, may be 0 ppm by mass or more, or 0.1 ppm by mass or more, and may be more than 1.0 ppm by mass, based on the amount of the (meth)acrylic acid compound. The amount of furfural in the (meth)acrylic acid raw material or the aqueous solution prepared therefrom may be 0 ppm by mass or more, and 3.0 ppm by mass or less, 2.5 ppm by mass or less, or 2.0 ppm by mass or less, based on the amount of the (meth)acrylic acid compound. The amount of furfural in the (meth)acrylic acid raw material or the aqueous solution prepared therefrom may be 0.1 ppm by mass or more, and 3.0 ppm by mass or less, 2.5 ppm by mass or less, or 2.0 ppm by mass or less, based on the amount of the (meth)acrylic acid compound.

The amount of benzaldehyde in the (meth)acrylic acid raw material or the aqueous solution prepared therefrom may be 3.0 ppm by mass or less, 2.5 ppm by mass or less, or 2.0 ppm by mass or less, and may be 0 ppm by mass or more or 0.1 ppm by mass or more, based on the amount of the (meth)acrylic acid compound. The amount of benzaldehyde in the (meth)acrylic acid raw material or the aqueous solution prepared therefrom may be 0 ppm by mass or more, and 3.0 ppm by mass or less, 2.5 ppm by mass or less, or 2.0 ppm by mass or less, based on the amount of the (meth)acrylic acid compound. The amount of benzaldehyde in the (meth)acrylic acid raw material or the aqueous solution prepared therefrom may be 0.1 ppm by mass or more, and 3.0 ppm by mass or less, 2.5 ppm by mass or less, or 2.0 ppm by mass or less, based on the amount of the (meth)acrylic acid compound.

The amount of acrolein in the (meth)acrylic acid raw material or the aqueous solution prepared therefrom may be 2.0 ppm by mass or less, 1.5 ppm by mass or less, or 1.0 ppm by mass or less, and may be 0 ppm by mass or more or 0.1 ppm by mass or more, based on the amount of the (meth)acrylic acid compound. The amount of acrolein in the (meth)acrylic acid raw material or the aqueous solution prepared therefrom may be 0 ppm by mass or more, and 2.0 ppm by mass or less, 1.5 ppm by mass or less, or 1.0 ppm by mass or less, based on the amount of the (meth)acrylic acid compound. The amount of acrolein in the (meth)acrylic acid raw material or the aqueous solution prepared therefrom may be 0.1 ppm by mass or more, and 2.0 ppm by mass or less, 1.5 ppm by mass or less, or 1.0 ppm by mass or less, based on the amount of the (meth)acrylic acid compound.

The (meth)acrylic acid raw material and the aqueous solution prepared therefrom may further include a polymerization inhibitor. Examples of the polymerization inhibitor include methoxyphenols such as p-methoxyphenol. Adjustment of the amount of the polymerization inhibitor can also be involved in controlling the particle diameter of the obtained water-absorbent resin particles. The amount of methoxyphenol in the (meth)acrylic acid raw material or the aqueous solution prepared therefrom may be 300 ppm by mass or less, 250 ppm by mass or less, or 220 ppm by mass or less, and may be 0 ppm by mass or more, 100 ppm by mass or more, 150 ppm by mass or more, or 180 ppm by mass or more, based on the amount of the (meth)acrylic acid compound. The amount of methoxyphenol in the (meth)acrylic acid raw material or the aqueous solution prepared therefrom may be 0 ppm by mass or more, and 300 ppm by mass or less, 250 ppm by mass or less, or 220 ppm by mass or less, based on the amount of the (meth)acrylic acid compound. The amount of methoxyphenol in the (meth)acrylic acid raw material or the aqueous solution prepared therefrom may be 100 ppm by mass or more, and 300 ppm by mass or less, 250 ppm by mass or less, or 220 ppm by mass or less, based on the amount of the (meth)acrylic acid compound. The amount of methoxyphenol in the (meth)acrylic acid raw material or the aqueous solution prepared therefrom may be 150 ppm by mass or more, and 300 ppm by mass or less, 250 ppm by mass or less, or 220 ppm by mass or less, based on the amount of the (meth)acrylic acid compound. The amount of methoxyphenol in the (meth)acrylic acid raw material or the aqueous solution prepared therefrom may be 180 ppm by mass or more, and 300 ppm by mass or less, 250 ppm by mass or less, or 220 ppm by mass or less, based on the amount of the (meth)acrylic acid compound. The amount of methoxyphenol can be quantified by liquid chromatography.

The aqueous solution may include (meth)acrylic acid and a salt of (meth)acrylic acid as the (meth)acrylic acid compound. The ratio of the salt of (meth)acrylic acid may be, for example, 50% by mole or more and 100% by mole or less, based on the total amount of the (meth)acrylic acid compound. The salt of (meth)acrylic acid may be, for example, an alkali metal salt of (meth)acrylic acid. The alkali metal salt of (meth)acrylic acid may be a sodium salt.

The aqueous solution including (meth)acrylic acid and a salt thereof can be prepared, for example, by a method including preparing a (meth)acrylic acid raw material including (meth)acrylic acid and protoanemonin, and neutralizing a part of the (meth)acrylic acid in the (meth)acrylic acid raw material with an alkaline aqueous solution including a basic compound. The basic compound may be an alkali metal hydroxide (for example, sodium hydroxide). Adjustment of the content of iron in the alkaline aqueous solution for neutralizing (meth)acrylic acid can also contribute to stable production of the water-absorbent resin particles having an appropriate particle diameter. The content of iron in the alkaline aqueous solution for neutralizing (meth)acrylic acid may be less than 4.0 ppm by mass, less than 3.0 ppm by mass, less than 2.0 ppm by mass, less than 1.0 ppm by mass, less than 0.5 ppm by mass, or less than 0.2 ppm by mass in terms of Fe₂O₃ with respect to the amount of the basic compound. The phrase, in terms of Fe₂O₃, means converting the amount of iron atoms into the equivalent amount of Fe₂O₃, based on the corresponding amount of substance.

The monomers in the aqueous solution may further include water-soluble ethylenically unsaturated monomers other than the (meth)acrylic acid compound. A ratio of the (meth)acrylic acid compound with respect to the total amount of the monomers may be 60% by mole or more, 70% by mole or more, 80% by mole or more, 90% by mole or more, or 95% by mole or more, and may be substantially 100% by mole. The water-soluble ethylenically unsaturated monomers other than the (meth)acrylic acid compound may include, for example, at least one selected from the group consisting of 2-(meth)acrylamide-2-methylpropanesulfonic acid and an alkali salt thereof, (meth)acrylamide, N,N-dimethyl (meth)acrylamide, 2-hydroxyethyl (meth)acrylate, N-methylol (meth)acrylamide, polyethylene glycol mono(meth)acrylate, N,N-diethylaminoethyl (meth)acrylate, N,N-diethylaminopropyl (meth)acrylate, and diethylaminopropyl (meth)acrylamide.

The aqueous solution may include an internal crosslinking agent that crosslinks a polymer of monomers formed by a polymerization reaction. The internal crosslinking agent may be a compound having two or more reactive functional groups having reactivity with a monomer (in particular, a (meth)acrylic acid compound). The reactive functional group can be, for example, a (meth)acryloyl group, a vinyl group, an epoxy group, a halogen group in a haloepoxy compound, an isocyanate group, or a combination thereof.

Examples of the internal crosslinking agent having two or more (meth)acryloyl groups include a (meth)acrylic acid ester compound formed of a polyol compound and (meth)acrylic acid, an unsaturated polyester formed of a polyol compound and an unsaturated carboxylic acid (maleic acid, fumaric acid, or the like), a bis(meth)acrylamide compound (N,N'-methylene bis(meth)acrylamide or the like), a (meth)acrylic acid ester compound formed of a polyepoxide compound and (meth)acrylic acid, and a (meth)acrylic acid carbamyl ester compound formed of a polyisocyanate compound (tolylene diisocyanate, hexamethylene diisocyanate, or the like) and hydroxyethyl (meth)acrylate. A polyol compound for forming the (meth)acrylic acid ester compound or the unsaturated polyester may be, for example, ethylene glycol, propylene glycol, trimethylolpropane, glycerin, polyoxyethylene glycol, polyoxypropylene glycol, polyglycerin, or a combination thereof.

The vinyl group as a reactive functional group may be a part of an allyl group. Examples of the internal crosslinking agent having two or more vinyl groups (or allyl groups) include allylated starch, allylated cellulose, diallyl phthalate, N,N',N"-triallyl isocyanurate, and divinylbenzene.

Examples of the internal crosslinking agent having two or more epoxy groups include (poly)ethylene glycol diglycidyl ether, (poly)propylene glycol diglycidyl ether, (poly)glycerin diglycidyl ether, (poly)glycerin triglycidyl ether, (poly)propylene glycol polyglycidyl ether, and polyglycerol polyglycidyl ether.

Examples of the internal crosslinking agent having two or more isocyanate groups include 2,4-tolylene diisocyanate and hexamethylene diisocyanate.

The amount of the internal crosslinking agent may be 0 mmol or more and 0.5 mmol or less, 0 mmol or more and 0.2 mmol or less, 0 mmol or more and 0.1 mmol or less, 0 mmol or more and 0.05 mmol or less, or 0 mmol or more and 0.02 mmol or less, and may be substantially 0 mmol, with respect to 1 mol of the monomer.

The aqueous solution may include, as other components, a thickener, a hydrophilic polymer dispersing agent, a radical polymerization initiator, a chain transfer agent, a foaming agent, or a combination thereof.

Examples of the thickener include hydroxyalkyl celluloses such as hydroxyethyl cellulose (HEC) and hydroxypropyl cellulose (HPC); hydroxyalkyl alkyl celluloses such as hydroxyethyl methyl cellulose, hydroxypropyl methyl cellulose, and hydroxyethyl ethyl cellulose; carboxyalkyl celluloses such as carboxymethyl cellulose; and carboxyalkyl hydroxyalkyl celluloses such as carboxymethyl hydroxyethyl cellulose. The thickener may be used alone or in combination with two or more kinds thereof.

The amount of the thickener may be 0.05 parts by mass or more and 20 parts by mass or less, 0.2 parts by mass or more and 10 parts by mass or less, or 0.4 parts by mass or more and 5 parts by mass or less per 100 parts by mass of the monomer.

Examples of the hydrophilic polymer dispersing agent include polyvinyl alcohol (PVA), polyvinylpyrrolidone (PVP), polyethylene glycol (PEG), polypropylene glycol, a polyethylene glycol-polypropylene glycol block copolymer, polyglycerin, polyoxyethylene glycerin, polyoxypropylene glycerin, a polyoxyethylenepolyoxypropylene glycerin copolymer, and a polyoxyethylene sorbitan fatty acid ester. The hydrophilic polymer dispersing agent may be used alone or in combination with two or more kinds thereof.

The amount of the hydrophilic polymer dispersing agent may be 0.001 parts by mass or more and 10 parts by mass or less, 0.005 parts by mass or more and 5 parts by mass or less, 0.01 parts by mass or more and 3 parts by mass or less, or 0.01 parts by mass or more and 1.5 parts by mass or less per 100 parts by mass of the monomer.

The radical polymerization initiator may include, for example, an azo-based compound, a peroxide, or a combination thereof.

Examples of the azo-based compound include 2,2'-azobis[2-(N-phenylamidino)propane]dihydrochloride, 2,2'-azobis {2-[N-(4-chlorophenyl)amidino]propane}dihydrochloride, 2,2'-azobis{2-[N-(4-hydroxyphenyl)amidino]propane}dihydrochloride, 2,2'-azobis[2-(N-benzylamidino)propane]dihydrochloride, 2,2'-azobis[2-(N-allylamidino)propane]dihydrochloride, 2,2'-azobis(2-amidinopropane)dihydrochloride, 2,2'-azobis{2-[N-(2-hydroxyethyl)amidino]propane} dihydrochloride, 2,2'-azobis[2-(5-methyl-2-imidazolin-2-yl)propane]dihydrochloride, 2,2'-azobis[2-(2-imidazolin-2-yl)propane]dihydrochloride, 2,2'-azobis[2-(4,5,6,7-tetrahydro-1H-1,3-diazepin-2-yl)propane]dihydrochloride, 2,2'-azobis[2-(5-hydroxy-3,4,5,6-tetrahydropyrimidin-2-yl)propane]dihydrochloride, 2,2'-azobis{2-[1-(2-hydroxyethyl)-2-imidazolin-2-yl]propane} dihydrochloride, 2,2'-azobis(2-methylpropionamide)dihydrochloride, 2,2'-azobis[2-(2-imidazolin-2-yl)propane]disulfate dihydrate, 2,2'-azobis[N-(2-carboxyethyl)-2-methylpropionamidine]tetrahydrate, and 2,2'-azobis[2-methyl-N-(2-hydroxyethyl)propionamide].

Examples of the peroxide include persulfates such as potassium persulfate, ammonium persulfate, and sodium persulfate; organic peroxides such as methyl ethyl ketone peroxide, methyl isobutyl ketone peroxide, di-t-butyl peroxide, t-butyl cumyl peroxide, t-butyl peroxyacetate, t-butyl peroxyisobutyrate, and t-butyl peroxypivalate; and hydrogen peroxide.

The amount of the radical polymerization initiator may be, for example, 0.0001 mol or more and 1 mol or less, 0.001 mol or more and 0.1 mol or less, 0.003 mol or more and 0.08 mol or less, or 0.007 mol or more and 0.05 mol or less with respect to 100 mol of the monomers.

Examples of the chain transfer agent include a hypophosphite, a thiol, a thiol acid, a secondary alcohol, and an amine.

Examples of the foaming agent include inorganic foaming agents such as ammonium carbonate, sodium bicarbonate, and ammonium bicarbonate; and organic foaming agents, such as nitroso compounds such as dinitroso pentamethylenetetramine, azo compounds such as azodicarbonamide and azobis(isobutyronitrile), and sulfonyl hydrazide compounds such as 4,4'-oxybisbenzenesulfonyl hydrazide and p-toluenesulfonyl hydrazide.

The reaction solution for reverse phase suspension polymerization can be formed by stirring a mixed solution that includes the prepared aqueous solution and an oil solution which is a hydrophobic liquid mainly formed of a hydrophobic dispersion medium. The reaction solution includes a particulate aqueous solution dispersed in the oily liquid. A particulate hydrogel polymer including a polymer of the monomers and water are formed by a polymerization reaction in the reaction solution.

The reaction solution may include a surfactant. The surfactant may be included in the oily liquid. The surfactant may be a nonionic surfactant or an anionic surfactant. Examples of the nonionic surfactant include sorbitan fatty acid esters, polyglycerin fatty acid esters, sucrose fatty acid esters, polyoxyethylene sorbitan fatty acid esters, polyoxyethylene glycerin fatty acid esters, sorbitol fatty acid esters, polyoxyethylene sorbitol fatty acid esters, polyoxyethylene alkyl ethers, polyoxyethylene alkylphenyl ethers, polyoxyethylene castor oil, polyoxyethylene hydrogenated castor oil, alkylallyl formaldehyde condensed polyoxyethylene ethers, polyoxyethylene polyoxypropylene block copolymers, polyoxyethylene polyoxypropyl alkyl ethers, and polyethylene glycol fatty acid esters. Examples of the anionic surfactant include fatty acid salts, alkylbenzene sulfonate, alkylmethyl taurate, polyoxyethylene alkylphenyl ether sulfuric acid ester salts, polyoxyethylene alkyl ether sulfonic acid salts, phosphoric acid esters of polyoxyethylene alkyl ethers, and phosphoric acid esters of polyoxyethylene alkyl allyl ethers. The surfactant may be used alone or in combination with two or more kinds thereof.

The oily liquid in the reaction solution is a hydrophobic liquid mainly formed of a hydrophobic dispersion medium. The dispersion medium may be a hydrocarbon dispersion medium. The oily liquid may further include any additive such as a hydrophobic polymer dispersing agent.

Examples of the hydrocarbon dispersion medium include chain aliphatic hydrocarbons such as n-hexane, n-heptane, 2-methylhexane, 3-methylhexane, 2,3-dimethylpentane, 3-ethylpentane, and n-octane; alicyclic hydrocarbons such as cyclohexane, methylcyclohexane, cyclopentane, methylcyclopentane, trans-1,2-dimethylcyclopentane, cis-1,3-dimethylcyclopentane, and trans-1,3-dimethylcyclopentane; and aromatic hydrocarbons such as benzene, toluene, and xylene. The hydrocarbon dispersion medium may be used alone or in combination with two or more kinds thereof.

The amount of the dispersion medium included in the oily liquid may be 30 parts by mass or more and 1,000 parts by mass or less, 50 parts by mass or more and 650 parts by mass or less, 70 parts by mass or more and 550 parts by mass or less, or 100 parts by mass or more and 450 parts by mass or less per 100 parts by mass of the monomer.

Examples of the hydrophobic polymer dispersing agent include maleic anhydride-modified polyethylene, maleic anhydride-modified polypropylene, a maleic anhydride-modified ethylene-propylene copolymer, a maleic anhydride-modified ethylene propylene diene terpolymer (EPDM), maleic anhydride-modified polybutadiene, a maleic anhydride-ethylene copolymer, a maleic anhydride-propylene copolymer, a maleic anhydride-ethylene-propylene copolymer, a maleic anhydride-butadiene copolymer, polyethylene, polypropylene, an ethylene-propylene copolymer, oxidized polyethylene, oxidized polypropylene, an oxidized ethylene-propylene copolymer, an ethyleneacrylic acid copolymer, ethyl cellulose, and ethyl hydroxyethyl cellulose. The hydrophobic polymer dispersing agent may be used alone or in combination with two or more kinds thereof.

The amount of the hydrophobic polymer dispersing agent may be 0.05 parts by mass or more and 10 parts by mass or less, 0.08 parts by mass or more and 5 parts by mass or less, or 0.1 parts by mass or more and 3 parts by mass or less per 100 parts by mass of the monomer.

The reaction solution may be heated for the polymerization reaction. The heating temperature for the polymerization reaction may be, for example, 40°C or higher and 90°C or lower. The time of the polymerization reaction may be, for example, 30 minutes or more and 240 minutes or less.

During the polymerization reaction, the reaction solution is usually stirred. In a case where the rotation speed for stirring is low, the ratio of the hydrogel-like polymer having a large particle diameter tends to increase. However, by appropriately adjusting the amount of protoanemonin, it is possible to easily control the particle diameter of the particulate hydrogel polymer and the water-absorbent resin particles to be obtained in an appropriate range even in a case of a relatively small rotation speed. The rotation speed for the stirring during the polymerization reaction may be, for example, 200 rpm or more and 1000 rpm or less.

The water-absorbent resin particles including a polymer are recovered from a reaction solution (slurry) including a particulate hydrogel polymer. The recovery of the water-absorbent resin particles from the reaction solution includes, for example, forming a concentrate by extracting a part of water from the reaction solution by azeotropic distillation of the dispersion medium and water, and evaporating the dispersion medium, water, and trace components (protoanemonin, furfural, benzaldehyde, and acrolein) from the concentrate. After the removal by evaporation of the dispersion medium and the like, powder of the water-absorbent resin particles including the dried polymer particles can be obtained. Water may remain to some extent in the dried polymer particles (water-absorbent resin particles).

After water is extracted, the polymer particles may be surface-crosslinked in a mixture including a concentrate including the polymer particles (water-absorbent resin particles) including a polymer, and a surface crosslinking agent.

The surface crosslinking agent may be a compound having two or more reactive functional groups, and examples thereof include polyols such as ethylene glycol, propylene glycol, 1,4-butanediol, trimethylolpropane, glycerin, polyoxyethylene glycol, polyoxypropylene glycol, and polyglycerin; polyglycidyl compounds such as (poly)ethylene glycol diglycidyl ether, (poly)glycerin diglycidyl ether, (poly)glycerin triglycidyl ether, trimethylolpropane triglycidyl ether, (poly)propylene glycol polyglycidyl ether, and (poly)glycerol polyglycidyl ether; haloepoxy compounds such as epichlorohydrin, epibromohydrin, and α-methyl epichlorohydrin; isocyanate compounds such as 2,4-tolylene diisocyanate and hexamethylene diisocyanate; oxetane compounds such as 3-methyl-3-oxetane methanol, 3-ethyl-3-oxetane methanol, 3-butyl-3-oxetane methanol, 3-methyl-3-oxetane ethanol, 3-ethyl-3-oxetane ethanol, and 3-butyl-3-oxetane ethanol; oxazoline compounds such as 1,2-ethylenebisoxazoline; carbonate compounds such as ethylene carbonate; and hydroxyalkylamide compounds such as bis[N,N-di(β-hydroxyethyl)]adipamide. The surface crosslinking agent may include a polyglycidyl compound such as (poly)ethylene glycol diglycidyl ether, (poly)glycerin diglycidyl ether, (poly)glycerin triglycidyl ether, (poly)propylene glycol polyglycidyl ether, and polyglycerol polyglycidyl ether. These surface crosslinking agents may be used alone or in combination with two or more kinds thereof.

The amount of the surface crosslinking agent may be 0.01 mmol or more and 10 mmol or less, 0.03 mmol or more and 3 mmol or less, or 0.05 mmol or more and 1 mmol or less per mole of the monomer units constituting the polymer in the polymer particles.

The mixture may be heated for surface crosslinking. The heating temperature may be, for example, 60°C or higher and 200°C or lower, or 80°C or higher and 150°C or lower. The reaction time of the surface crosslinking reaction may be, for example, 1 minute or more and 300 minutes or less, or 5 minutes or more and 200 minutes or less.

The dispersion medium can be removed from the concentrate to obtain dried polymer particles (water-absorbent resin particles). To this end, the concentrate may be heated.

Various additives may be further added to the dried polymer particles. Examples of the additive include a lubricant, a metal chelating agent, a surface modifying agent, a heat resistance stabilizer, an antioxidant, and an antibacterial agent.

The lubricant may be, for example, amorphous silica particles. Examples of a metal chelating agent include ethylenediaminetetraacetic acid and a salt thereof (disodium ethylenediaminetetraacetate and the like), and diethylenetriaminepentaacetic acid and a salt thereof (pentasodium diethylenetriaminepentaacetate). Examples of the surface modifying agent include polyvalent metal compounds such as aluminum sulfate, potassium alum, ammonium alum, sodium alum, and (poly)aluminum chloride; and hydrates thereof; and polycationic compounds such as polyethyleneimine, polyvinyl amine, and polyallyl amine.

An additive may be attached to the surface of the polymer particles or may have penetrated into the interior of the polymer particles. By adding an additive (for example, a lubricant) to the dried polymer particles, the additive can be attached to the surface of the polymer particles. An additive may be added to a liquid for polymerization or a concentrate after water removal. In the present specification, the water-absorbent resin particles mean particles including polymer particles. The water-absorbent resin particles may include polymer particles and an additive.

The amount of the additive (for example, the lubricant) may be, for example, 0.001 parts by mass or more and 10 parts by mass or less, 0.01 parts by mass or more and 5 parts by mass or less, or 0.1 parts by mass or more and 2 parts by mass or less per 100 parts by mass of the polymer particles.

In the powder of the dried polymer particles (water-absorbent resin particles), a ratio of the particles having a particle diameter of 850 µm or more may be less than 20% by mass, 15% by mass or less, 10% by mass or less, or 5% by mass or less with respect to the total amount of the water-absorbent resin particles. The ratio as mentioned here means a ratio before the powder is classified by being dried, sieving, or the like. A method for determining the ratio of the particles having a particle diameter of 850 µm or more includes sieving powder having a mass W₀ g of the water-absorbent resin particles through a sieve having an opening of 850 µm, measuring a mass W₁ g of the particles remaining on the sieve, and calculating the ratio of the particles having a particle diameter of 850 µm or more using Expression: ratio of particles having particle diameter of 850 µm or more = (W₁/W₀) × 100. The particles having a particle diameter of 850 µm or more may be excluded from the product by classification. It is advantageous that the ratio of particles having a particle diameter of 850 µm or more in the powder before the classification after the polymerization is small from the viewpoint of effective utilization of raw materials for producing (meth)acrylic acid and the like.

### [Examples]

The present invention is not limited to the following Examples.

### 1. Acrylic Acid Raw Material

Acrylic acid raw materials (1) to (5) including acrylic acid were prepared as a main component. Table 1 shows a pure content (acrylic acid concentration) of each acrylic acid raw material and contents of trace components of protoanemonin, furfural, benzaldehyde, acrolein, and p-methoxyphenol. The contents of the trace components shown in the table are ratios (ppm by mass) with respect to the mass of the acrylic acid.

**[Table 1]**

| Acrylic acid raw material | Purity [% by mass] | Trace components [ppm by mass] | | | | |
|---|---|---|---|---|---|---|
| | | Protoanemonin | Furfural | Benzaldehyde | Acrolein | p-Methoxy phenol |
| (1) | 99.9 | 1 or less | 1 or less | 2 or less | 1 or less | 200 |
| (2) | 99.9 | 2.5 | 2.5 | 2 or less | 1 or less | 200 |
| (3) | 99.9 | 4.6 | 1.6 or less | 2 or less | 1 or less | 200 |
| (4) | 99.9 | 4.9 | 2.5 | 2 or less | 1 or less | 200 |
| (5) | 99.9 | 7.0 | 2 or less | 2 or less | 1 or less | 200 |

### 2. Production of Water-Absorbent Resin Particles

### Example 1a

A round-bottomed cylindrical separable flask having an inner diameter of 11 cm and an internal volume of 2 L equipped with a reflux condenser, a dropping funnel, a nitrogen gas introduction tube, and a stirrer was prepared. A stirrer blade having two stages of four inclined paddle blades with a blade diameter of 5 cm was attached to the stirrer. 313 g of n-heptane as a hydrocarbon dispersion medium and 0.920 g of a maleic anhydride-modified ethylene-propylene copolymer (Mitsui Chemicals, Inc., Hi-Wax 1105A) as a polymeric dispersant were placed in the prepared separable flask. The temperature of the mixture in the separable flask was raised to 80°C while stirring, thereby forming an n-heptane solution including a maleic anhydride-modified ethylene-propylene copolymer. After completion of the stirring, the n-heptane solution was cooled to 56°C.

73.60 g (1.02 mol) of an acrylic acid raw material (1) was placed in a beaker having an internal capacity of 300 mL. While the beaker was cooled with ice water, 102.1 g of an aqueous sodium hydroxide solution having a concentration of 30% by mass was added dropwise to the beaker to prepare a 75% by mole neutralized product of acrylic acid (1). Next, 68.6 g of water, 0.1104 g (0.408 mmol) of potassium persulfate as a radical polymerization initiator, and 0.0083 g (0.048 mmol) of ethylene glycol diglycidyl ether as an internal crosslinking agent were added to the beaker and dissolved to prepare an aqueous solution including acrylic acid and sodium acrylate.

The prepared aqueous solution was added to the n-heptane solution including the anhydrous maleic acid-modified ethylene-propylene copolymer in the separable flask. The mixed solution in the separable flask was stirred for 10 minutes. Next, a surfactant solution including 0.920 g of a sucrose stearic acid ester (RYOTO Sugar Ester S-370, manufactured by Mitsubishi-Chemical Foods Corporation, HLB: 3) and 8.28 g of n-heptane was added to the mixed solution. While stirring the reaction solution formed in the separable flask with a stirrer at a rotation speed of 450 rpm, the inside of the separable flask was sufficiently purged with nitrogen. After the nitrogen purging, the separable flask was immersed in a water bath at 70°C to raise the temperature of the reaction solution, thereby initiating the polymerization reaction. The polymerization reaction was allowed to proceed for 60 minutes while maintaining the stirring, thereby forming a slurry including a particulate hydrogel polymer.

A separable flask into which the slurry had been incorporated was immersed in an oil bath at 125°C. While refluxing n-heptane included in the slurry in the separable flask, 126.8 g of water included in the slurry was extracted to the outside of the separable flask by azeotropic distillation of n-heptane and water. Next, the separable flask was heated in an oil bath at 125°C, and n-heptane and the like were evaporated to obtain 95.3 g of dried water-absorbent resin particles.

### Examples 2a, 2b, 3a, and 4a, and Comparative Example 1a

Water-absorbent resin particles were obtained by the same procedure as in Example 1a, except that the acrylic acid raw materials shown in Table 2 were used and the rotation speed of the stirrer during the polymerization reaction was set as shown in Table 2.

### 3. Evaluation of Water-Absorbent Resin Particles

The powder of the water-absorbent resin particles obtained in Examples or Comparative Examples was sieved through a sieve having an opening of 850 µm. The mass of the water-absorbent resin particles having a particle diameter of 850 µm or more remaining on the sieve was measured. A ratio (% by mass) of the particles having a particle diameter of 850 µm or more with respect to the total amount of the water-absorbent resin particles was calculated.

**[Table 2]**

| | Acrylic acid raw material | Protoanemonin [ppm by mass] | Rotation speed of stirrer during polymerization reaction [rpm] | Ratio of particles with diameters of 850 µm or more [% by mass] |
|---|---|---|---|---|
| Ex. 1a | (1) | 1 or less | 450 | 5% by mass or less |
| Ex. 2a | (2) | 2.5 | 450 | 5% by mass or less |
| Ex. 2b | (2) | 2.5 | 300 | 5% by mass or less |
| Ex. 3a | (3) | 4.6 | 450 | 5% by mass or less |
| Ex. 4a | (4) | 4.9 | 450 | 5% by mass or less |
| Comp. Ex. 1a | (5) | 7.0 | 450 | 20% by mass or more |

The evaluation results are shown in Table 2. It was confirmed that the particle diameters of the water-absorbent resin particles to be obtained can be controlled such that the ratio of particles having a particle diameter of 850 µm or more is reduced by adjusting the amount of protoanemonin with respect to the amount of acrylic acid.

## Claims

1. A method for producing water-absorbent resin particles, the method comprising:
preparing an aqueous solution that includes monomers including at least one (meth)acrylic acid compound of (meth)acrylic acid or a salt thereof, protoanemonin, and water;
forming a particulate hydrogel polymer including a polymer of the monomers and water by reverse phase suspension polymerization in a reaction solution including the aqueous solution and a dispersion medium; and
recovering water-absorbent resin particles including the polymer from the reaction solution,
wherein the aqueous solution including the protoanemonin in an amount of 6.0 ppm by mass or less with respect to an amount of the (meth)acrylic acid compound is prepared, and
in a case where the aqueous solution includes the salt of (meth)acrylic acid, the amount of the (meth)acrylic acid compound is a total amount of an amount of the (meth)acrylic acid and an amount of (meth)acrylic acid corresponding to an amount of substance of the salt.

2. The method according to claim 1,
wherein the aqueous solution including the protoanemonin in an amount of more than 1.0 ppm by mass and 4.7 ppm by mass or less with respect to the amount of the (meth)acrylic acid compound is prepared.

3. The method according to claim 1 or 2,
wherein the reaction solution further includes a polymerization inhibitor.

4. The method according to claim 1,
wherein a ratio of particles having a particle diameter of 850 µm or more in the water-absorbent resin particles is less than 20% by mass with respect to a total amount of the water-absorbent resin particles.

5. A method for controlling particle diameters of water-absorbent resin particles, the method comprising:
preparing an aqueous solution that includes monomers including at least one (meth)acrylic acid compound of (meth)acrylic acid or a salt thereof, protoanemonin, and water;
forming a particulate hydrogel polymer including a polymer of the monomers and water by reverse phase suspension polymerization in a reaction solution including the aqueous solution and a dispersion medium; and
recovering water-absorbent resin particles including the polymer from the reaction solution,
wherein particle diameters of the water-absorbent resin particles are controlled by adjusting an amount of the protoanemonin in the prepared aqueous solution.

6. The method according to claim 5,
wherein the particle diameters of the water-absorbent resin particles are controlled such that a ratio of particles having a particle diameter of 850 µm or more in the water-absorbent resin particles is less than 20% by mass with respect to a total amount of the water-absorbent resin particles.

7. The method according to claim 5 or 6,
wherein the particle diameters of the water-absorbent resin particles are controlled by adjusting an amount of the protoanemonin with respect to an amount of the (meth)acrylic acid compound in the prepared aqueous solution to 6.0 ppm by mass or less, and
in a case where the aqueous solution includes the salt of (meth)acrylic acid, the amount of the (meth)acrylic acid compound is a total amount of an amount of the (meth)acrylic acid and an amount of (meth)acrylic acid corresponding to an amount of substance of the salt.
